# EUROPEAN PATENT SPECIFICATION

(11) **EP 3 195 336 B1**
(45) Date of publication and mention of the grant of the patent: **06.06.2018**
(21) Application number: 15747823.1
(22) Date of filing: 10.08.2015
(51) Int. Cl.: H01F 27/30, H01F 27/38, H01F 27/32

(54) **INDUCTIVE ELECTRICAL COMPONENT WITH AUXILIARY WINDING**
INDUKTIVES ELEKTRISCHES BAUELEMENT MIT HILFSWICKLUNG
COMPOSANT ÉLECTRIQUE INDUCTIF AVEC UN ENROULEMENT AUXILIAIRE

(30) Priority: 15.09.2014 EP 14184695
(43) Date of publication of application: 26.07.2017
(73) Proprietor: Philips Lighting Holding B.V., 5656 AE Eindhoven (NL)
(72) Inventor: ACKERMANN, Bernd, NL-5656 AE Eindhoven (NL); ELFERICH, Reinhold, NL-5656 AE Eindhoven (NL); JOHN, David, Llewellyn, NL-5656 AE Eindhoven (NL)
(74) Representative: Verweij, Petronella Daniëlle
(86) International application number: PCT/EP2015/068363
(87) International publication number: WO 2016/041694

(56) References cited:
- DE-A1-102009 058 835
- GB-A- 2 461 509
- US-A1- 2007 139 152
- US-B1- 8 031 040

## Description

### FIELD OF THE INVENTION

The invention relates to an electrical component comprising at least one winding, to an electrical circuit comprising such an electrical component, and to a method of operating the electrical circuit. More specifically, the invention relates to an electrical component with a main winding and an auxiliary winding.

### BACKGROUND OF THE INVENTION

Known inductive electrical components comprise at least one winding of a conductor wound on a bobbin, i. e. a carrier part such as a spindle or cylinder. Such electrical components comprise e. g. inductor or sensor coils with only one winding (i. e. multiple turns of a conductor wire), or electrical transformers with two or more windings. These windings, which will be referred to here as main windings, provide an inductance and/or inductive coupling. They may be used in many different electric circuits. In particular in switched mode power supplies depending on the chosen topology, an inductor or transformer may be used as energy storage and/or for voltage transformation.

DE 10 2009 058 835 A1 describes a sensor coil with a coil carrier comprising at least two winding compartments. The coil carrier is made by injection molding, and metallic conductor traces are applied directly on the surface thereof made by MID (molded interconnect device) techniques. Conductor tracks extend from plug contacts essentially parallel in axial direction on the surface of the carrier.

In some applications, inductive components with a main winding have been used with an additional auxiliary winding, i. e. one or more turns of a further conductor arranged in inductive coupling with the main windings. Generally, an auxiliary winding comprises relatively few turns, generally less than the main windings of the electrical component. The additional auxiliary winding may be used for different purposes in an electrical circuit, such as e. g. for measuring, for providing an additional power supply etc.

Such auxiliary windings may be provided on coils and transformers as one or more turns of a further conductor wire, electrically insulated from the main windings. However, the necessary electrical insulation may add to the complexity of the component, and the provision of a very small number of turns of the auxiliary winding may give rise to problems of exact arrangement thereof.

US 2007/139152 discloses a balanced transformer having an auxiliary coil. The transformer comprises a balanced coil set, a detective coil and an iron core set. The balanced coil set and the detective coil are wound on the bobbin.

### SUMMARY OF THE INVENTION

It may be considered an object to provide an electrical component with an auxiliary winding of simple construction.

This object is solved by an electrical component according to claim 1, an electrical circuit according to claim 12, and by an operating method according to claim 14. Dependent claims refer to preferred embodiments of the invention.

The present inventors have recognized that if an auxiliary winding is simply wound on the bobbin, together with a main winding or even with multiple main windings, the positioning of very few turns of wire is not defined exactly, and will result in considerable tolerance of the induced voltage.

According to the invention, it is proposed to provide at least one auxiliary winding comprised of a conductor trace provided on a surface of the bobbin. This facilitates manufacture of the component, and can help to reliably achieve exact positioning and therefore reduced tolerance.

While the main windings of the electrical component, i. e. in the case of a coil a single inductor winding, or in the case of a transformer at least a primary and secondary winding, may be provided as turns of a conductor wire wound on the bobbin, the auxiliary winding is provided as a conductor trace on the surface thereof. The auxiliary winding thus provided may comprise only one turn, but could also be formed to comprise two or more turns, as will be explained for preferable embodiments below. The auxiliary winding is arranged to be inductively coupled to at least one main winding, i. e. a variable current flow through this winding induces a current in the auxiliary winding. Preferably, the main winding(s) and the auxiliary winding are wound around a common axis, and/or around a common ferromagnetic core.

The bobbin serves as a carrier for the main winding(s). It is made of electrically non-conductive material. In a preferred embodiment, the bobbin is made of a plastic material, e. g. made by injection molding. The conductor trace may be provided on the surface thereof by techniques known as molded interconnect device (MID). Examples of such MID techniques are laser direct structuring, two shot injection molding, or hot embossing.

According to one preferred embodiment of the invention, the bobbin may include at least one winding compartment, axially bordered by at least one flange, preferably by flanges at both axial ends of the winding compartment. The winding compartment provides a space to hold wound conductor wires. The main winding is wound within said winding compartment. It is preferred to provide the conductor trace for the auxiliary winding on a flange of the winding compartment, separated from the main winding by the flange. The outer axial surface of the flange allows positioning of the auxiliary winding with good inductive coupling. Further, the material of the flange provides electrical insulation.

Preferably, the electrical component comprises a ferromagnetic core, arranged such that at least the main winding is wound around the core. It is preferred that the core is provided within an opening of the bobbin. In the case of a bobbin with at least a portion extending straight along a longitudinal axis, the core preferably extends axially.

If more than one main winding is wound on the bobbin, it is preferred to provide a second winding wound around a first winding, separated by an insulator.

In one preferred embodiment, the auxiliary winding comprises at least two turns of the conductor trace. In this case, it is preferred to achieve an insulated crossing of the two turns of the auxiliary winding by providing a bridging element. The bridging element is preferably electrically conducting in a longitudinal direction, and is preferably arranged electrically in series with at least one turn of the auxiliary winding, preferably between two turns. The bridging element allows crossing of a conductor trace by providing an insulation (by an air gap or non-conductive material, or both) against electrical contact to a crossed conductor trace. For example, the bridging element may be an SMD component. Sufficient conductivity may be obtained even with available SMD resistors with sufficiently low resistance values, such as 1 Ω or below, preferably 1 mΩ or below.

In one embodiment of the invention, a plurality of terminals are provided. Two of the terminals may be connected to the main winding. Two of the terminals may be connected to the ends of the auxiliary winding. A base plate made out of electrically insulating material may be fixed to the bobbin, which includes that the base plate and the bobbin may be provided as commonly molded parts. Electrical terminals may be provided on the surface on one side of the base plate. Conductor traces, preferably made by MID technique, may be provided to extend around the base plate up to a second side surface, opposite to the first side surface. As will become apparent in connection with preferred embodiments, this may serve to easily achieve electrical connections, in particular if the terminals are provided on the underside of the base plate, e. g. for SMD contacting.

According to a further preferred embodiment of the invention, at least one surface mounted device (SMD) component may be provided on the bobbin, electrically connected to at least one conductor trace. This SMD component may e. g. be used as a bridging element to provide a crossover. Also, further circuit elements may be provided as SMD components on the surface of the bobbin to form an electric circuit.

The invention further relates to an electric circuit comprising an electrical inductive component as described above, wherein the auxiliary winding is connected to serve as an electrical power supply. For example, the electrical circuit may comprise an integrated circuit element necessitating electrical operating power. The integrated circuit element may comprise electrical supply terminals therefor. The auxiliary winding may then be connected to the electrical supply terminals, such that in operation of the component with a varying current through the main windings, a current induced in the auxiliary winding serves as a source of electrical power for operation of the integrated circuit element.

This may in particular be useful for circuits comprising a controllable switching element electrically connected to at least one of the main windings, where the integrated circuit element is provided to control the controllable switching element. If the controllable switching element is operated to alternate between a conducting and nonconducting state, a time-variant electrical current flows through the main winding, thereby inducing a current into the inductively coupled auxiliary winding.

In particular in switch mode power supplies (SMPS), it is useful to supply power to a controller IC through an auxiliary winding in this way.

These and other aspects of the invention will be apparent from and elucidated with reference to the embodiments described hereinafter.

### BRIEF DESCRIPTION OF THE DRAWINGS

In the drawings,
figure 1 shows a perspective view of a first embodiment of a transformer;
figure 2 shows an exploded view of the transformer of figure 1 including windings on a bobbin;
figure 3 shows a longitudinal sectional view of the bobbin of figure 2 with the section taken along the line B..B in figure 2;
figure 4 shows a perspective view of a bobbin according to a second embodiment;
figure 5 shows a sectional view of the bobbin of figure 3 with the section taken along C..C;
figure 6 shows a circuit diagram of a first circuit including a transformer with an auxiliary winding;
figure 7 shows a circuit diagram of a second circuit including an inductor with an auxiliary winding.

### DESCRIPTION OF EMBODIMENTS

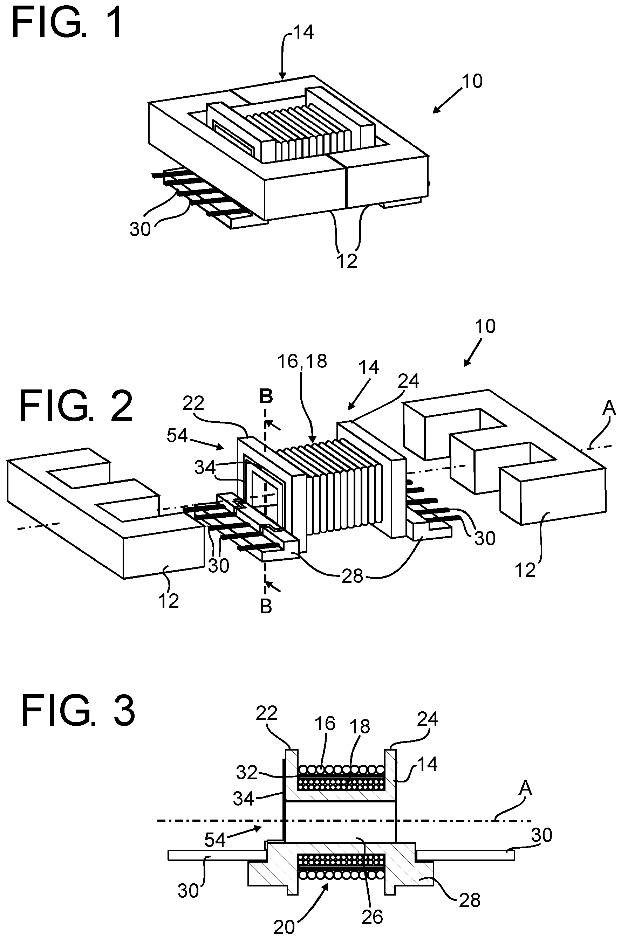

Figure 1 shows in a perspective view a transformer 10 as one example of an inductive electrical component. As shown in fig. 1 - 3, and in particular in the exploded view of fig. 2, the transformer 10 includes two halves of a ferromagnetic core 12 and a bobbin 14 with primary and secondary windings 16, 18 as main windings. The windings 16, 18 are provided as turns of conductor wire wound around a longitudinal axis A of the bobbin 14.

The bobbin 14 is made out of a plastic material by injection molding and comprises a winding compartment 20 axially bordered at both ends by first and second flanges 22, 24. The axial center of the bobbin 14 includes an opening 26 for receiving the ferromagnetic core 12 as shown in fig. 2.

Made in one piece with the bobbin 14, a base plate is provided with a plurality of pins as electrical conductor terminals 30.

As shown in the longitudinal sectional view of fig. 3, the primary winding 16 and secondary winding 18 are wound on top of each other with an electrical insulation layer 32 provided in between. The primary and secondary winding 16, 18 are contained within the winding compartment 20, axially bordered by the flanges 22, 24 at both ends. It should be noted that the individual wires of the windings 16, 18 are shown here for illustration only, and not to scale. The actual number of turns for each winding may vary.

The transformer 10 further comprises an auxiliary winding 54 provided as a conductor trace 34 on the outer surface of the bobbin 14, namely in this example on the outer surface of one of the flanges 22, shown to the left in fig. 1 - 3.

As shown in fig. 2, the conductor trace 34 extends between two electrical terminals 30 and comprises a plurality of sections, in this example arranged at right angles, surrounding the axial opening 26 of the bobbin 14.

The auxiliary winding 54 thus formed comprises only one winding turn. Due to the arrangement in parallel to the conductors of the primary and secondary windings, and due to the arrangement of the conductor track 34 extending around the axis A, the auxiliary winding 54 is in good inductive coupling with the main windings (primary and secondary windings 16, 18). If the core 12 is inserted, the auxiliary winding 54 extends around the central portion of the core 12.

The conductor trace 34 is a flat metal structure provided directly on the surface of the non-conductive plastic material of the bobbin 14. The bobbin 14 is made by injection molding, with the conductor traces 34 provided on a part of its surface by MID (molded interconnect device) technology. Thus, traces of conductive material are formed directly on the surface of the bobbin 14, which may be provided as a piece of thermoplastic material, wherein the conductor traces 34 need not be further fixed or applied thereto.

Examples of such MID technology are e. g. laser direct structuring (LDS), two-shot injection molding or hot embossing. In LDS, the plastic material of the bobbin 14 is doped with metal-plastic additive which may be activated by a laser. After forming the bobbin 14 in an injection molding process, a laser writes the desired conductor tracks 34 onto the surface thereof, thereby activating the metal additive and forming a substrate for subsequent metallization, e. g. in a copper bath.

In two-shot injection molding, two different resins are used, of which one is metal-platable (such as e. g. ABS), and the other is non-metal-platable (e. g. polycarbonate). The platable resin is provided in the desired shape of the conductor tracks 34, which are subsequently formed by a plating process.

In hot embossing, the conductor traces 34 are embossed on the plastic material of the bobbin 14 using a hot stamping die. Under elevated temperature, a metal foil is stamped onto the surface with a certain pressure, thereby applying the foil forming the conductive tracks 34.

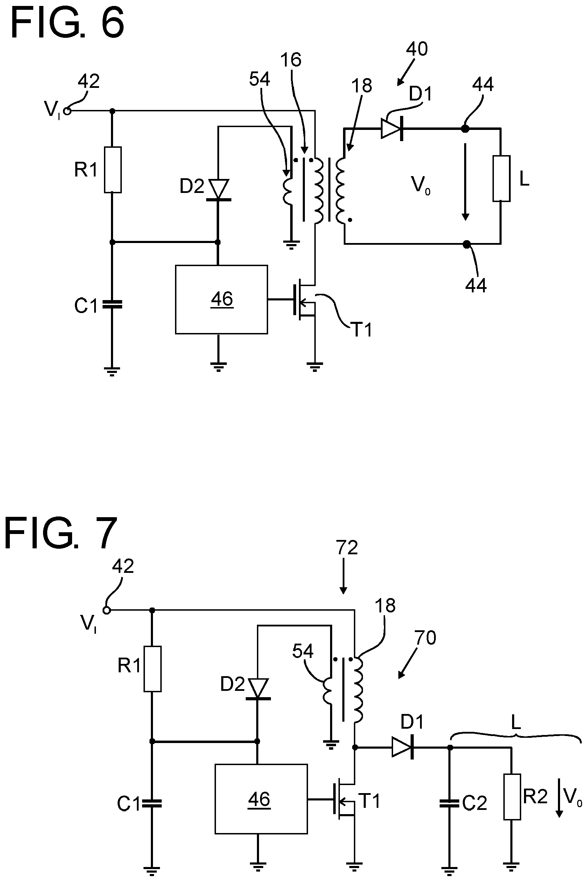

Fig. 6 shows an exemplary electric circuit 40 comprising the transformer 10 with inductively coupled primary winding 16, 18 and auxiliary winding 54. The circuit 40 is an example of a switch mode power supply (SMPS), where an input voltage V_{I} delivered to an input terminal 42 is transformed into an output voltage Vo applied to a load L between output terminals 44.

Within the circuit 40 shown in fig. 6, the primary winding 16 of the transformer 10 is connected to the input terminal 42 and to ground via a transistor T1 as switching element. An integrated circuit 46 acts as a controller controlling the switching element T1 to be turned on and off, thereby selectively allowing current to flow from the input terminal 42 through the primary winding 16.

On the secondary side of transformer 10, the secondary winding 18 is connected via a diode D1 in series to the output 44 with the load L. The topology of the circuit 40 is known as a flyback converter.

The integrated controller circuit 46 requires operating power to perform the function of controlling the switching element T1 to achieve a desired voltage and/or current at the output terminals 44. In an initial startup period, the integrated circuit 46 is powered by a current flow through the startup resistor R1 which charges a capacitor C1. During the startup period, the integrated control circuit 46 will consume little power. During the later switching operation, the integrated control circuit 46 requires considerably more power than during the startup period.

Rather than supplying the operating power via the startup resistor R1, which would result in considerable losses in the resistor R1, power is supplied from the auxiliary winding 54 of transformer 10. As the integrated control circuit 46 controls the switching element T1 to allow the current through the primary winding 16 to flow in pulses, a current is induced into the inductively coupled auxiliary winding 54.

This current is rectified by rectifier diode D2 and supplied to the integrated control circuit 46 as operating power, stabilized by capacitor C1.

Thus, the circuit 40 shown in fig. 6 is an example of how within a circuit comprising a transformer 10 an auxiliary winding may be used as a power supply for another component of the same circuit, in this case an integrated circuit 46 that controls a switching element T1.

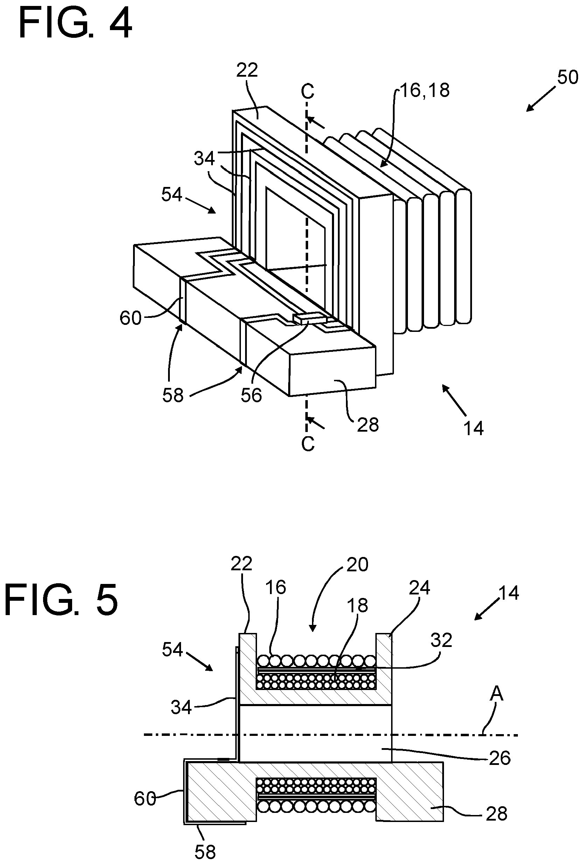

Fig. 4 shows a part of a second embodiment of a component 50. The component 50, of which only a part of the bobbin 14 is shown in fig. 4, corresponds in large parts to the component 10 according to fig. 1 - 3. Like parts will be referenced by like reference numerals. In the following, only differences will be further explained.

The bobbin 14 of the component 50 also comprises an auxiliary winding 54. As in the first embodiment, the auxiliary winding 54 is formed of conductor traces 34 formed on the surface of the bobbin 14, namely on the flange 22, made by an MID technique.

In contrast to the component 10 according to the first embodiment, the auxiliary winding 54 of the component 50 comprises two turns of the conductor traces 34. As shown in fig. 4, a lower portion of the conductor traces 34 are provided on the base plate 28 of the bobbin 14, which is however an integral component of the bobbin 14.

In order to achieve the necessary electrically insulated crossover, an SMD component 56 is provided on the surface of the bobbin 14, in this example on the base plate 28. The SMD component 56 is a low ohm SMD resistor electrically connected between two SMD pads formed by the conductor traces 34, whereas another conductor trace passes below the SMD part 56, electrically insulated therefrom.

Thus, between electrical terminals 58 there is provided the auxiliary winding 54 with two turns, inductively coupled to the main windings 16, 18.

As shown in the longitudinal sectional view of fig. 5, conductor traces 60 formed also by MID technology on the surface of the base plate 28 extend around the base plate 28, forming terminals 58 as SMD connection pads on the underside of the base plate 28.

While the invention has been illustrated and described in detail in the drawings and foregoing description, such illustration and description are to be considered illustrative or exemplary and not restrictive; the invention is not limited to the disclosed embodiments.

For example, while the described electrical components 10, 50 as transformers each comprise two main windings 16, 18, a component may alternatively be provided as a coil, e. g. an inductor coil, with only one main winding wound on a bobbin (not shown). As an example, fig. 7 shows a circuit 70. The circuit 70 is a switch mode power supply with the topology of a boost converter, using a coil 72 with only one main winding 18 instead of the transformer 40 in fig. 6. As shown in fig. 7, the integrated circuit 46 controls the switch T1 consecutively to open and close, thus leading to a variable current through the main winding 18 and to supply of an output voltage V₀ to the load L comprised of a capacitor C2 and resister R2 in parallel. Also here, the auxiliary winding 54 may deliver electrical operating power to the integrated circuit 46.

Other variations to the disclosed embodiment can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality.

The mere fact that certain measures are shown in different embodiments only, or are recited in mutually different dependent claims, does not indicate that a combination of these measures cannot be used to advantage. Any reference signs in the claims should not be construed as limiting the scope.

## Claims

1. Electrical component comprising at least one main winding (16, 18) comprised of a plurality of conductor wire turns wound on a bobbin (14), **characterized in that**
at least one auxiliary winding (54) comprised of at least one turn of a conductor trace (34) provided on a surface of said bobbin (14).

2. Electrical component according to claim 1, wherein
- said bobbin (14) is made of a plastic material,
- and said conductor trace (34) is provided on said surface of said bobbin (14) by molded interconnect device (MID) technique.

3. Electrical component according to claim 2, wherein
- said conductor trace (34) is provided on said surface of said bobbin (14) by laser direct structuring, two-shot injection molding, or hot embossing.

4. Electrical component according to one of the above claims, wherein
- said bobbin (14) includes at least one winding compartment (20) axially bordered by at least one flange (22, 24), said main winding (16, 18) being wound within said compartment (20),
- wherein said conductor trace (34) is provided on said flange (22), separated from said main winding (16, 18) by said flange (22).

5. Electrical component according to one of the above claims, further comprising
- a ferromagnetic core (12) provided within an opening (26) of said bobbin (14).

6. Electrical component according to one of the above claims, further comprising
- at least first and second main winding (16, 18), each comprised of a plurality of conductor wire turns on said bobbin (14).

7. Electrical component according to claim 6, wherein
- said conductor wire of said second main winding (16) is wound around said conductor wire turns of said first main winding (18), separated therefrom by an insulator (32).

8. Electrical component according to one of the above claims, wherein
- said auxiliary winding (54) comprises at least two turns of said conductor trace (34),
- wherein a bridging element (56) provides an insulated crossing.

9. Electrical component according to one of the above claims, wherein
- a plurality of electrical terminals (30) are provided, wherein two of said terminals (30) are connected to at least one main winding (16, 18), and wherein two of said terminals (30) are connected to said auxiliary winding (54).

10. Electrical component according to claim 9, further comprising
- a base plate (28) made out of an electrically insulating material, said base plate (28) being fixed to said bobbin (14),
- wherein said terminals (58) are provided on a first surface of said base plate (28),
- and wherein conductor traces (60) provided on the surface of said base plate (28) are electrically connected to said terminals (58), said conductor traces (60) extending around said base plate (28) up to a second side surface thereof, opposite to said first side surface.

11. Electrical component according to one of the above claims, wherein
- at least one surface mounted component (56) is provided on said bobbin (14) electrically connected to at least one conductor trace (34).

12. Electrical circuit, comprising
- an electrical component (10, 50) according to one of the above claims,
- at least one integrated circuit element (46) comprising electrical supply terminals for supply of electrical operating power,
- wherein said auxiliary winding (54) is connected to said electrical supply terminals to supply electrical power to said integrated circuit element (46).

13. Circuit according to claim 12, wherein
- at least one controllable switching element (T1) is electrically connected to at least one main winding (18),
- and said integrated circuit element (46) is provided to control said controllable switching element (T1).

14. Method of operating an electrical circuit (40), said electrical circuit (40) comprising an integrated circuit element (46) and an electrical component (10, 50) according to one of claims 1 - 11, wherein
- said main winding (16, 18) is operated with a time variant current,
- and said integrated circuit element (46) is supplied with electrical power from a current induced into said auxiliary winding (34).

## Patentansprüche

1. Elektrisches Bauelement umfassend mindestens eine Hauptwicklung (16, 18), die mehrere Leiterdrahtwindungen umfasst, die auf einer Spule (14) gewickelt sind, **dadurch gekennzeichnet,**
**dass** mindestens eine Hilfswicklung (54) aus mindestens einer Windung einer Leiterbahn (34) besteht, die auf einer Oberfläche der Spule (14) vorgesehen ist.

2. Elektrisches Bauelement nach Anspruch 1, wobei
- die Spule(14) aus einem Kunststoffmaterial hergestellt ist
und die Leiterbahn (34) auf der Oberfläche des Spulenkörpers (14) durch eine MID-Technik (Molded Interconnect Device) vorgesehen ist.

3. Elektrisches Bauelement nach Anspruch 2, wobei
- die Leiterbahn (34) auf der Oberfläche der Spule (14) durch Laserdirektstrukturierung, Zweistufenspritzguss oder Heißprägung vorgesehen ist.

4. Elektrisches Bauelement nach einem der vorherigen Ansprüche, wobei
- die Spule (14) mindestens ein Spulelement (20) umfasst, das axial von mindestens einem Flansch (22, 24) begrenzt ist,
- wobei die Hauptwicklung (16, 18) innerhalb des Elements (20) gewickelt ist,
- wobei die Leiterbahn (34) an dem Flansch (22) getrennt von der Hauptwicklung (16, 18) durch den Flansch (22) vorgesehen ist.

5. Elektrisches Bauelement nach einem der vorherigen Ansprüche, weiter
- einen ferromagnetischen Kern (12) umfassend, der in einer Öffnung (26) der Spule (14) vorgesehen ist.

6. Elektrisches Bauelement nach einem der vorherigen Ansprüche, weiter
- mindestens eine erste und eine zweite Hauptwicklung (16, 18) umfassend, die jeweils mehrere Leiterdrahtwindungen an der Spule (14) umfasst.

7. Elektrisches Bauelement nach Anspruch 6, wobei
- der Leiterdraht der zweiten Hauptwicklung (16) um die Leiterdrahtwindungen der ersten Hauptwicklung (18) gewickelt ist, die davon durch einen Isolator (32) getrennt sind.

8. Elektrisches Bauelement nach einem der vorherigen Ansprüche, wobei
- die Hilfswicklung (54) mindestens zwei Windungen der Leiterbahn (34) umfasst, wobei ein Brückenelement (56) einen isolierten Übergang bereitstellt.

9. Elektrisches Bauelement nach einem der vorherigen Ansprüche, wobei
- mehrere elektrische Anschlüsse (30) vorgesehen sind, wobei zwei der Anschlüsse (30) mit mindestens einer Hauptwicklung (16, 18) verbunden sind und wobei zwei der Anschlüsse (30) mit der Hilfswicklung (54) verbunden sind.

10. Elektrisches Bauelement nach Anspruch 9, weiter
- eine Grundplatte (28) umfassend, die aus einem elektrisch isolierenden Material hergestellt ist, wobei die Grundplatte (28) an der Spule (14) befestigt ist,
- wobei die Anschlüsse (58) auf einer ersten Oberfläche der Grundplatte (28) vorgesehen sind,
- und wobei Leiterbahnen (60), die auf der Oberfläche der Grundplatte (28) vorgesehen sind, elektrisch mit den Anschlüssen (58) verbunden sind, wobei sich die Leiterbahnen (60) um die Grundplatte (28) herum bis zu einer zweiten Seitenfläche erstrecken, die der ersten Seitenfläche gegenüberliegt.

11. Elektrisches Bauelement nach einem der vorstehenden Ansprüche, wobei
- mindestens ein oberflächenmontiertes Element (56) an der Spule (14) vorgesehen ist, das elektrisch mit mindestens einer Leiterbahn (34) verbunden ist.

12. Elektrische Schaltung umfassend
- ein elektrisches Element (10, 50) nach einem der vorstehenden Ansprüche,
- ein integriertes Schaltungselement (46), dass elektrische Versorgungsanschlüsse zur Versorgung mit elektrischer Betriebsleistung umfasst,
- wobei die Hilfswicklung (54) mit den elektrischen Versorgungsanschlüssen verbunden ist, um dem integrierten Schaltungselement (46) elektrische Leistung zuzuführen.

13. Schaltung nach Anspruch 12, wobei
- mindestens ein steuerbares Schaltelement (T1) mit mindestens einer Hauptwicklung (18) elektrisch verbunden ist
- und das integrierte Schaltungselement (46) zur Steuerung des steuerbaren Schaltelements (T1) vorgesehen ist.

14. Verfahren zum Betreiben einer elektrischen Schaltung (40), wobei die elektrische Schaltung (40) ein integriertes Schaltungselement (46) und ein elektrisches Element (10, 50) nach einem der Ansprüche 1 bis 11 umfasst, wobei
- die Hauptwicklung (16, 18) mit einem zeitvarianten Strom betrieben wird,
und das integrierte Schaltungselement (46) mit elektrischer Leistung aus einem Strom versorgt wird, der in die Hilfswicklung (34) induziert wird.

## Revendications

1. Composant électrique comprenant au moins un enroulement principal (16, 18) composé d'une pluralité de spires de fil conducteur enroulées sur une bobine (14), **caractérisé en ce que**
au moins un enroulement auxiliaire (54) composé d'au moins une spire d'une piste conductrice (34) prévue sur une surface de ladite bobine (14).

2. Composant électrique selon la revendication 1, dans lequel
- ladite bobine (14) est composée d'un matériau plastique,
- et ladite piste conductrice (34) est fournie sur ladite surface de ladite bobine (14) par une technique de dispositif d'interconnexion moulé (DIM).

3. Composant électrique selon la revendication 2, dans lequel
- ladite piste conductrice (34) est prévue sur ladite surface de ladite bobine (14) par structuration directe au laser, moulage par injection en deux étapes ou gaufrage à chaud.

4. Composant électrique selon l'une des revendications ci-dessus, dans lequel
- ladite bobine (14) inclut au moins un compartiment d'enroulement (20) bordé axialement par au moins un rebord (22, 24),
ledit enroulement principal (16, 18) étant enroulé à l'intérieur dudit compartiment (20),
- dans lequel ladite piste conductrice (34) est prévue sur ledit rebord (22), séparée dudit enroulement principal (16, 18) par ledit rebord (22).

5. Composant électrique selon l'une des revendications ci-dessus, comprenant en outre
- un noyau ferromagnétique (12) prévu à l'intérieur d'une ouverture (26) de ladite bobine (14).

6. Composant électrique selon l'une des revendications ci-dessus, comprenant en outre
- au moins un premier et un second enroulement principal (16, 18), chacun composé d'une pluralité de spires de fil conducteur sur ladite bobine (14).

7. Composant électrique selon la revendication 6, dans lequel
- ledit fil conducteur dudit second enroulement principal (16) est enroulé autour desdites spires de fil conducteur dudit premier enroulement principal (18), séparé de celui-ci par un isolant (32).

8. Composant électrique selon l'une des revendications ci-dessus, dans lequel
- ledit enroulement auxiliaire (54) comprend au moins deux spires de ladite piste conductrice (34),
- dans lequel un élément formant pont (56) fournit un passage isolé.

9. Composant électrique selon l'une des revendications ci-dessus, dans lequel
- une pluralité de bornes électriques (30) sont prévues, dans lequel deux desdites bornes (30) sont connectées à au moins un enroulement principal (16, 18), et dans lequel deux desdites bornes (30) sont connectées audit enroulement auxiliaire (54).

10. Composant électrique selon la revendication 9, comprenant en outre
- une plaque de base (28) constituée d'un matériau électriquement isolant, ladite plaque de base (28) étant fixée à ladite bobine (14),
- dans lequel lesdites bornes (58) sont prévues sur une première surface de ladite plaque de base (28),
- et dans lequel les pistes conductrices (60) prévues sur la surface de ladite plaque de base (28) sont connectées électriquement auxdites bornes (58), lesdites pistes conductrices (60) s'étendant autour de ladite plaque de base (28) jusqu'à une seconde surface latérale de celle-ci, opposée à ladite première surface latérale.

11. Composant électrique selon l'une des revendications ci-dessus, dans lequel
- au moins un composant monté en surface (56) est prévu sur ladite bobine (14) connecté électriquement à au moins une piste conductrice (34).

12. Circuit électrique, comprenant
- un composant électrique (10, 50) selon l'une des revendications ci-dessus,
- au moins un élément de circuit intégré (46) comprenant des bornes d'alimentation électrique pour la fourniture d'énergie électrique de fonctionnement,
- dans lequel ledit enroulement auxiliaire (54) est connecté auxdites bornes d'alimentation électrique pour fournir l'énergie électrique audit élément de circuit intégré (46).

13. Circuit selon la revendication 12, dans lequel
- au moins un élément de commutation contrôlable (T1) est connecté électriquement à au moins un enroulement principal (18),
- et ledit élément de circuit intégré (46) est prévu pour contrôler ledit élément de commutation contrôlable (T1).

14. Procédé de fonctionnement d'un circuit électrique (40), ledit circuit électrique (40) comprenant un élément de circuit intégré (46) et un composant électrique (10, 50) selon l'une des revendications 1 à 11, dans lequel
- ledit enroulement principal (16, 18) fonctionne avec un courant variable dans le temps,
- et ledit élément de circuit intégré (46) est alimenté en énergie électrique à partir d'un courant induit dans ledit enroulement auxiliaire (34).
